# EUROPEAN PATENT APPLICATION

(11) **EP 4 053 965 A1**
(43) Date of publication of application: **07.09.2022**
(21) Application number: 21160655.3
(22) Date of filing: 04.03.2021
(51) Int. Cl.: H01M 10/44, G01R 31/382, H02J 7/00, H01M 10/42

(54) **METHODS AND SYSTEMS FOR DISCHARGING A BATTERY, AND COMPUTER PROGRAM PRODUCT**

(71) Applicant: Northvolt AB, 112 47 Stockholm (SE)
(72) Inventor: Nembhard, Nicole, 112 47 Stockholm (SE)
(74) Representative: AWA Sweden AB

(57) **Abstract**

The present disclosure provides a method of discharging a battery, comprising the steps: applying an initial discharge current to the battery, and repeatedly modifying the discharge current according to a predetermined schedule, so that the battery is maintained in a safe operating condition while being discharged.

Further provided is a system for discharging a battery, comprising battery discharging means and a control unit, wherein the control unit is configured to control the battery discharging means to execute a method according to this disclosure, with a battery provided to the system.

Also provided is a computer program product.

## Description

### Field

This disclosure relates to methods and systems for discharging batteries. In the following, the term "battery" is used for secondary batteries, i.e. rechargeable batteries. Such batteries are usually provided as modules, which may include multiple battery cells that are connected in series and/or in parallel, or packs, which may include one or more battery modules and associated control circuitry. In the following, the term "battery" is intended to encompass each or any of a single battery cell, a battery module, and/or a battery pack.

### Background

Through the rapid advancement of electrification in many industries, like the automotive or aviation industry, there is a growing demand for batteries. As batteries have a limited lifetime, there will soon be a rapid increase in used, aged, or end-of-life batteries that have to be disposed of. Considering the significant use of rare minerals for production of batteries, recycling of used-up batteries is indispensable.

One problem arising in battery recycling is that the charge level of returned batteries is usually unknown. Due to the high charge density of modern batteries, significant amounts of energy can be stored in the battery at the time it enters a recycling facility. If released in an uncontrolled manner, such stored energy can present a significant electrical shock or fire hazard.

Returned batteries are therefore subjected to a controlled discharge process. In this process, energy stored in the battery can either be dissipated as heat, when the battery is discharged through a resistor, or can be harvested for re-use, when the battery is discharged through a DC/DC converter or similar circuitry.

In the context of this disclosure, the term "discharging" is understood as fully discharging a battery down to a voltage of 0V. Such full discharging usually makes a battery unusable, as internal processes in the battery cells prevent recharging afterwards. Fully discharging a battery is sometimes also referred to as "overdischarging" or "deep discharging".

While some batteries may tend to show a rebound effect, where the output voltage increases again even after the battery has been discharged to 0V, it is essential that the output voltage of the battery reaches 0V at one time during the discharging process.

During the discharging process, heat is generated in the battery. This heat mainly comprises heat created by ohmic losses and by exothermic chemical processes when the battery charge approaches 0V. Overheating of a battery may lead to a pressure increase in individual battery cells, which may cause a battery to swell and eventually burst or explode. Overheating of a battery may also result in a thermal runaway, in which a cascade of exothermic chemical reactions eventually cause the battery to burn.

To avoid such hazards, a general approach is to discharge returned batteries with a low current. Known strategies include constant current (CC), constant resistance (CR), constant voltage (CV) or constant power (CP) control. Depending on the charge capacity of the battery, such low-current discharge can take up to 24 hours.

It would be desirable to provide a discharge method and system for batteries which requires less time, enabling a higher through-put of batteries in an industrial battery recycling process. It would also be desirable to provide a discharge method and system for batteries with a better control of related hazards. It would further be desirable to provide a discharge method and system which requires little or no human interaction.

### Summary

The present disclosure reaches one or more of the above objectives by providing a method for discharging a battery, comprising the steps: applying an initial discharge current to the battery, and repeatedly modifying the discharge current in according to a predetermined schedule, so that the battery is maintained in a safe operating condition while being discharged. By modifying the discharge current according to the predetermined schedule, a previously determined optimal discharge current can be applied to the battery, thereby providing a fast, efficient, and safe discharge process. The schedule provides for adjustment of the discharge current as the charge level of the battery decreases.

The method may further comprise the steps of identifying the type of battery, and determining the initial discharge current and/or the predetermined schedule based on the identified type of the battery. By these additional steps, higher discharge currents can be applied to batteries that can withstand high currents, thus facilitating even faster discharging of such batteries.

A method according to this disclosure may further comprise steps of repeatedly monitoring a status of the battery through one or more sensors, and modifying the discharge current in response to the status of the battery.

By monitoring the status of the battery and modifying the discharge current in response to the status, it is possible to apply a high discharge current while the battery is in a non-critical state, and to reduce the discharge current when the battery is in a transitional state, where the status of the battery changes in a direction towards a critical state. As a result, the total time needed for fully discharging a battery can be significantly reduced. A non-critical state of a battery is to be understood as a state in which the battery does not have an increased likeliness of overheating, pressure buildup, swelling, bursting, and/or short-circuiting. A non-critical state of a battery may be a state of the battery allowing for continued operation of the battery under the present conditions for a predetermined time, like e.g. 1 minute, 5 minutes, or 10 minutes, without damaging the battery.

A critical state of the battery is to be understood as a state where overheating, pressure buildup, swelling, bursting and/or short-circuiting is imminent. In case of detection of a critical state of a battery, appropriate countermeasures can be taken as described later herein.

A transitional state of the battery is understood as state when the battery has not yet reached a critical state, but reaching of a critical state is to be expected if operation of the battery is continued under the present conditions.

The step of monitoring the status of the battery may include determining at least one of output voltage, output voltage change rate, temperature, temperature change rate, shape of the battery, and/or emission behaviour of the battery. While the output voltage of a battery usually is a good indicator for the charge level of the battery, the output voltage change rate can, in combination with the known discharge current, be used as an indicator for the age of the battery. The temperature and temperature change rate of a battery can be used as indicators for a thermal state of the battery, and for the amount of heat generated in the battery by ohmic losses and/or chemical processes. The shape of a battery can be monitored to identify the onset of swelling, which is an indicator of pressure building up in the battery. The emission behaviour of a battery can be an indicator of imminent damage to the battery. The term "emission behaviour" can include, but is not limited to, acoustic emissions like sounds, and chemical emissions like smoke.

Monitoring the status of the battery may include determining an age and/or charge level of the battery from the output voltage, output voltage change rate, temperature, and/or temperature change rate of the battery.

The temperature of a battery may be a surface temperature of the battery. The temperature of a battery may be a core temperature of the battery. The core temperature of the battery may be measured by internal sensors of the battery, or may be estimated from the surface temperature and temperature change rate of the battery.

In a possible method according to the present disclosure, the discharge current may be modified in discrete steps. The discrete steps may be discrete steps in time, so that the discharge current is maintained constant for a certain time step, and then modified if appropriate according to the battery status, and then again maintained constant for the certain time step, and so on. The certain time step may be 1 second, 10 seconds, 1 minute, 2 minutes, 5 minutes, 10 minutes, or any other suitable time step. The discrete steps may be discrete current steps, so that the discharge current is modified from a first discharge current to a second discharge current, differing from the first discharge current by a certain current step. The current step may be 10A, 5A, 2A, 1A, 0.5A, 0.1A, or any other suitable current step. The current step may depend on the total discharge current, i.e. the current step may be 10A while the total discharge current is 20A or more, 5A while the total discharge current is 5A or more, and 1A while the total discharge current is 1A or more.

In a method according to the present disclosure, the discharge current may be modified when the output voltage drops below a threshold value. The discharge current may be reduced when the output voltage drops below a threshold value. The discharge current may be reduced if the temperature of the battery rises above a threshold value. The threshold values of the temperature and/or output voltage may be determined based on the type, and optionally the age and or the charge level, of the battery.

After modifying the discharge current, a method of the present disclosure may include maintaining the discharge current constant for a predetermined time, allowing the status of the battery to settle. Directly after modifying the discharge current, some parameters like the output voltage may show a transient behaviour, while other parameters like the temperature show a time-lag behaviour. Allowing the battery to settle for a predetermined time avoids such transient or time-lag behaviour from impacting the discharging process.

In one possible method according this disclosure, the discharge process may be terminated if the temperature change rate rises above a threshold level. The temperature change rate rising above the threshold level may indicate the battery being in an unstable state, like an onset thermal runaway. Terminating the discharge process may prevent the battery status from further degrading.

The method may further include subjecting the battery to external cooling if the temperature of the battery does not settle in a predetermined time after termination of the discharge process. Failure of the battery temperature to settle may be an indicator for the battery status changing towards a critical state. Failure of the battery temperature to settle may be an indicator for severe battery damage like ongoing thermal runaway. External cooling may include immersing or submersing the battery in cooling fluid, like in a water bath, or in any other suitable cooling fluid bath.

Another possible method may include terminating the discharge process and subjecting the battery to external cooling if abnormal emission behaviour of the battery is detected. An abnormal emission behaviour can include, but is not limited to, emission of sounds, sparks, flames or smoke.

The present disclosure reaches one or more of the above objectives by providing a system for discharging a battery, comprising battery discharging means and a control unit, wherein the control unit is configured to control the battery discharging means to execute a method according to the above description with a battery provided to the system.

The discharging means may comprise, but is not limited to, one or more of fixed resistors, variable resistors, current regulators, DC/DC converters, or similar circuitry.

The control unit may comprise processing circuitry and a memory device connected to the processing circuitry. The processing circuitry may comprise one or more of a microcontroller, a microprocessor, a graphical processing unit (GPU), an analogue signal processor (ASP), a digital signal processor (DSP), or any other suitable processor. The memory device may comprise one or more of a random access memory (RAM), a read only memory (ROM), a flash memory, a hard drive, or any other suitable memory device. The control unit may comprise a Von Neumann machine, a personal computer, or the like.

A system according to the present disclosure may comprise one or more sensors for monitoring a status of the battery.

A system according to the present disclosure may comprise battery identification means. The battery identification means may comprise one or more of a barcode reader, a QR-code reader, a machine vision system, and a manual input terminal. A vision system may comprise a camera, and may additionally comprise an image processing and/or image recognition system.

The one or more sensors of the system may comprise one or more of a temperature sensor, a voltage sensor, a current sensor, and a machine vision system. A temperature sensor may comprise one or more of a thermocouple, a PTC, an NTC, a pyrometer, or the like. A machine vision system may comprise a camera and image processing circuitry.

A system according to the present disclosure may further comprise a database connected to the control unit, the database storing characterizing data of one or more battery types to be provided to the system. The database may be a local database included in the system, an external database provided on an external server, or a cloud-based database.

A system according to the present disclosure may further comprise a battery connection unit having a plurality of different connecting elements suitable for connection with different battery types. Different connecting elements may be provided in form of a magazine, a carousel, or any other suitable mechanism for changing active connecting elements.

A system according to the present disclosure may further comprise a cooling unit. The cooling unit may be a water bath. The cooling unit may be a stirred water bath, a still water bath, or a constant flow water bath.

The present disclosure reaches one or more of the above objectives by providing a computer program product, comprising a set of machine-readable instructions stored on a volatile or non-volatile medium, which, when read and subsequently executed by a processing circuitry of a system according to the above description, cause the system to execute a method according to the above description. The computer program product may be provided on a floppy disk, a flash memory device, or may be downloadable from a cloud server. The computer program product may be transferred into the memory device of the control unit, and may be read and subsequently executed by the processing circuitry of the control unit.

One core aspect of the present disclosure is to provide a software-controlled discharging process which uses a three-axis graph of predefined voltage, current and temperature data to control the discharge of a battery pack or module down to 0V. The discharging process provided by this disclosure may be automated such that there needs to be little to no human interaction with the battery and the processing time may be shortened from 24 hours to between 4 and 8 hours.

Discharge curves for healthy and aged batteries may be generated and used as guides for the programme. The discharge curves may comprise a limit for a discharge current depending on battery output voltage and battery temperature. The programme may adjusts the discharge current according to the limit unless the temperature goes over a pre-determined set point, or the battery's status deteriorates in another way, in which case the current may be lowered.

For generating the discharge curves, behaviour of several different battery types of different age may be measured and analysed. Alternatively or additionally, known correlations between battery output voltage, discharge current, and battery heat production may be used to model an optimal discharge curve.

### Brief Description of the Drawings

The above and other aspects, features, and advantages of the present disclosure will become more apparent in light of the following detailed description when taken in conjunction with the accompanying drawings in which:
Fig. 1 shows a battery;
Fig. 2 shows a system for discharging a battery;
Fig. 3 shows a control unit;
Fig. 4 shows a flowchart of a process according to the present disclosure;
Fig. 5 shows a flowchart of a further process according to the present disclosure;
Fig. 6 shows a flowchart of yet another process according to the present disclosure.

### Detailed Description

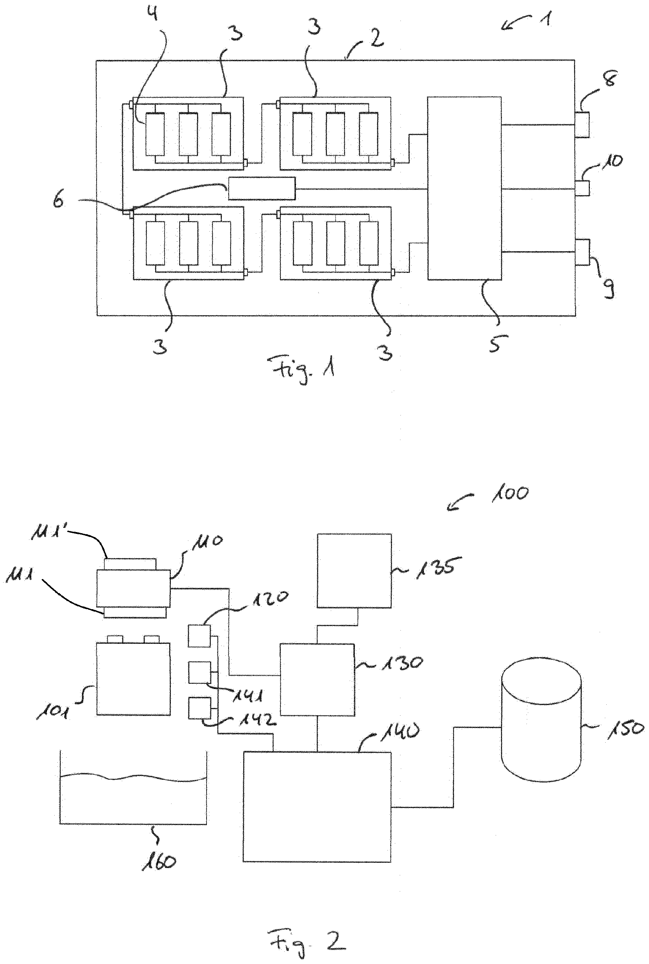

In Fig. 1, an exemplary battery is shown. The depicted battery is a battery pack 1 comprising a housing 2, in which a plurality of battery modules 3 are contained. In the shown example, the battery pack 1 contains four battery modules 3 connected in series.

Each of the four battery modules 3 contains a plurality of battery cells 4. In the shown example, each battery module 3 contains three battery cells 4 connected in parallel. In other possible battery designs, the battery cells of each battery module may be connected in series, while the battery modules of the battery pack are connected in parallel. In other possible battery designs, cells and modules may both be connected in series, or may both be connected in parallel. Battery design may be chosen so that the battery is best adapted for the intended use, whereas parallel connection of cells and/or modules may be used to provide higher output current, while serial connection of cells and/or modules may be used to provide higher output voltage.

The battery pack 1 further comprises control circuitry 5 and a sensor 6. The control circuitry 5 may monitor a status of the battery pack 1, e.g. a temperature and/or a charge level of the battery cells 3 and/or battery modules 4. The sensor 6 may be a temperature sensor. Other than shown in Fig. 1, the sensor 6 may also be integrated in individual modules 4 or cells 3.

The control circuitry 5 may serve to connect the respective battery modules 3 to output terminals 8, 9 of the battery pack 1. The control circuitry 5 may serve to disconnect the respective battery modules 3 from the output terminals 8, 9 if the status of the battery pack makes this necessary, e.g. to avoid overheating, overcharging, or overdischarging the battery pack 1 during normal operation. The control circuitry 5 may provide status information, e.g. a reading of the sensor 6, through an output terminal 10 of the battery pack 1.

In order to safely recycle a battery, like the battery pack 1, or any of the battery modules 3 or the individual battery cells 4, discharging is required. Figure 2 shows a possible embodiment of a system 100 for discharging a battery 101. The battery 101 itself is not part of the system 100, but is shown in Fig. 2 for better understanding.

The system 100 comprises battery connection unit 110, battery identification means 120, battery discharging means 130, an optional energy storage system 135, a control unit 140, a database 150, and a cooling unit 160.

### Battery connecting unit

The battery connection unit 110 serves to connect the battery 101 to the system 100. The battery connection unit 110 may comprise one or more connecting elements 111, 111' for connecting output terminals of the battery 101. A plurality of connecting elements 111, 111' may be provided for connecting with different types of batteries. In the shown example, the battery connecting unit 110 has a first connecting element 111 on a first side, and a second connecting element 111' on a second side. For connecting a different battery to the system, the battery connection unit 110 may be turned by 180° to connect the second connecting element 111' with the battery 101.

In an alternative design, the battery connecting unit 110 may comprise a single connecting element 111, and a plurality of adapters may be provided to connect the battery connection unit 110 with different types of batteries 101. The plurality of adapters may be provided in any suitable manner, like on a carousel, in a magazine, or the like.

In yet another alternative design, the one or more connecting elements 111,111' may comprise manually operable clamps (not shown), which can be attached to output terminals of the battery 101.

The battery connection unit may be operated manually, semi-automatic, or fully automatic. For a semi- or fully automatic operation, the system may further comprise battery identification means.

### Battery identification means

Battery identification means 120 are provided in the system 100 in order to enable automatic detection of the type of the battery 101 to be discharged. Detection of the battery type may enable automatic selection of a suitable connecting element, and/or determination of appropriate discharging process parameters as explained further below.

The battery identification means 120 may include a manual input terminal like a keyboard, a touchscreen, or the like. A user may read an identification code provided on the battery 101, and enter the identification code through the manual input terminal. The battery identification means 120 may include a barcode or QR-code reader for automatically scanning an identification code provided on the battery. The battery identification means 120 may include a machine vision system comprising a camera and an image processing device for automatically detecting a battery type of the battery 101 through the size, shape, or other optical properties of the battery 101.

### Battery discharging means

The battery discharging means 130 are connected to the battery connecting unit 110 and are designed to apply a discharge current to the battery 101.

The battery discharging means 130 may comprise one or more fixed or variable resistors, which can be connected to poles of the battery 101. By connecting a resistor to the poles of the battery 101, a discharge current will flow between the poles of the battery 101 and through the resistor. One or more constant current regulators (CCR) may be connected in series with the one or more resistors, to provide for a constant discharge current being applied to the battery 101, irrespective of changes in the output voltage of the battery 101.

The battery discharging means 130 may comprise one or more manually or electronically operable switches, designed to switch a discharge current between different current paths. The different current paths may comprise different resistors and/or different CCRs, so that a discharge current can be modified by switching it between different current paths.

By routing the discharge current through one or more resistors, electric energy stored in the battery 101 is converted into heat, which is then dissipated from the resistors. Instead of dissipating the electric energy as heat, the energy may be harvested for further use. Therefore, the battery discharging means 130 may comprise electronic converters, like DC/DC-converters, which convert the discharge current of the battery 101 into a usable current. The usable current can e.g. be used to charge an energy storage system 135, like a battery storage. Instead of charging a storage system, the usable current can directly be fed into a network, like the electric supply network of a battery recycling facility (not shown).

The battery discharging means 130 may comprise a digital or analogue communication interface, through which the switches and/or converters may be controlled.

### Control unit

The system 100 further comprises a control unit 140. The main function of the control unit is to control the battery discharging means 130 to facilitate safe and fast discharging of the battery 101. In some embodiments, the control unit 140 may further monitor a state of the battery 101 through one or more sensors 141, 142, and control the battery discharging means 130 in response to the determined state of the battery 101. The sensors 141, 142 will be described in more detail further below.

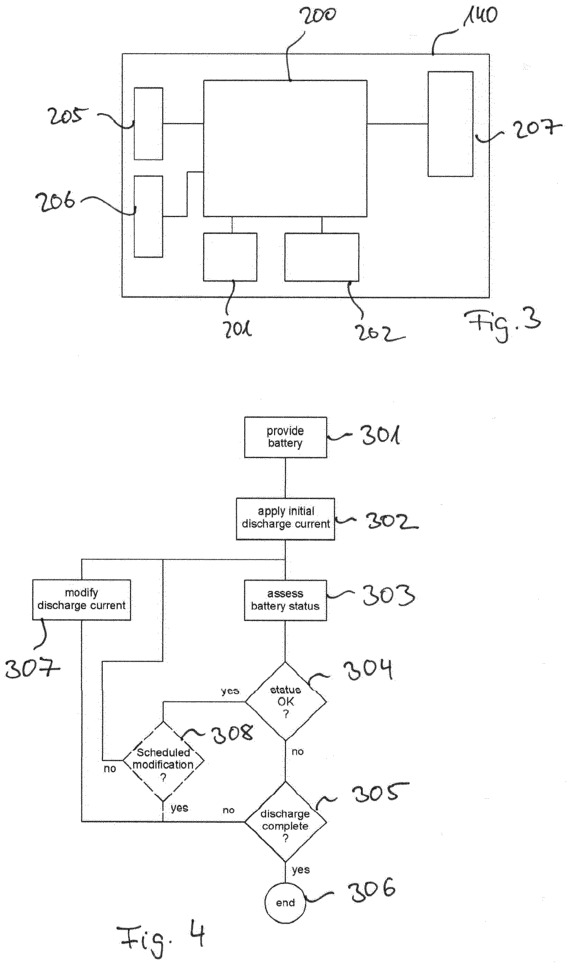

A possible embodiment of the control unit 140 is shown in Fig. 3. The core of the control unit 140 is a processing circuitry 200, which can be any suitable microcontroller, microprocessor, or graphical processing unit. Known examples of such processing circuitry include a Motorola 68000 processor, an intel 80486 processor, or the like. The processing circuitry 200 is connected to two memory devices 201, 202.

Memory device 201 may be a dynamic random access memory (DRAM), and may be used by the processing circuitry 200 for temporarily storing data like sensor readings, battery parameter, intermediate calculation results, or the like.

Memory device 202 may be read only memory (ROM) or a static random access memory (SRAM), and may be used for storing program instructions for the processing circuitry 200.

The control unit further comprises a digital input/output interface 205, an analogue input/output interface 206, and a network interface 207. Through interfaces 205, 206, 207, the processing circuitry 200 can communicate with digital devices like the battery discharging means and/or battery identification means, with analogue devices like sensors 141, 142, and with an external network.

The digital input/output interface 205 may comprise a USB interface, an RS-232 interface, or the like. The analogue input/output interface may comprise one or more digital-to-analogue converters (DAC), analogue-to-digital converters (ADC), and the like.

### Sensors

The system 100 may comprise sensors 141, 142. While two sensors 141, 142 are shown, any other suitable number of sensors may be applied in the system 100.

One of the sensors 141, 142 may be a temperature sensor for determining a temperature of the battery 101. The temperature sensor may be a contacting temperature sensor, which can be applied to an outer surface of the battery 101. Possible contacting temperature sensors include, but are not limited to, a thermocouple, a PTC, or an NTC sensor. The temperature sensor may be a contactless temperature sensor, which can determine the surface temperature of the battery 101 from a distance. Possible contactless temperature sensors include, but are not limited to, IR-sensors, pyrometers, or thermographic cameras.

One of the sensors 141, 142 may be a voltage sensor, for determining an output voltage of the battery 101. A voltage sensor can preferably be included in the battery discharging means. Voltage sensors usually include filters and a voltage divider circuit, and optionally an analogue-to-digital converter (ADC), to provide a digital voltage reading.

One of the sensors 141, 142 may be a current sensor for determining a discharge current of the battery 101. Current sensors usually include a shunt resistor, coupled with a voltage sensor (see above) for determining a voltage drop over the shunt resistor.

One of the sensors 141, 142 may be a vision system, comprising a camera and an image processing system. The vision system may be part of the battery identification means. The vision system may be used to detect changes in the shape of the battery 101, which may be an indicator for an internal pressure buildup. The vision system may further be used to detect emission of fumes, smoke, spark and/or flames from the battery 101.

One of the sensors 141, 142 may be a microphone. A microphone may be a capacitive microphone, an inductive microphone, or a piezoelectric microphone. A microphone can be used to detect noise emissions from the battery, which can be an indicator of internal pressure buildup and/or sparking.

### Cooling unit

The cooling unit 160 may serve for cooling the battery 101 when a risk of overheating and/or thermal runaway is detected by the control unit 140. In this case, the battery 101 may be disconnected from the battery connecting unit, and then be dropped, pushed, or otherwise moved into the cooling unit 160. In the shown embodiment, the cooling unit is a coolant fluid bath. The coolant fluid may be a cooling liquid. The coolant liquid may be water. Other coolant fluids may include cooling gases, like CO₂ or N2, or dedicated heat-transfer fluids as e.g. sold by the Eastman Chemical Company under the name "THERMINOL". The coolant fluid bath may be a still bath, where the coolant fluid is not actively circulated or stirred. The coolant fluid bath may be a stirred bath, wherein the coolant fluid is stirred to improve thermal exchange between the coolant fluid and the battery. The coolant fluid bath may be a circulated bath, where the coolant fluid is actively circulated through a coolant fluid path, so that heated coolant fluid can cool down before contacting the battery again. The coolant fluid path may include a heat exchanger (not shown) for cooling the heated coolant fluid.

### Database

In the shown embodiment of the system 100, the control unit 140 is connected to an external database 150. The connection between the control unit 140 and the database 150 may be a network connection. The database may be hosted on a database server (not shown). The database server may be on-site. The database server may be an external database server. The external database server may be a cloud server. In an alternative embodiment, the database 150 may be integrated with the control unit 140.

In the database 150, characteristic data of a plurality of different battery types may be stored. For each battery type, a separate record may be provided in the database 150. The data in each record may comprise a unique battery type identifier, which may be an integer number assigned to every battery type known to the system 100. The data may comprise limits of safe operating conditions for every battery type. The data may comprise a nominal output voltage, a maximum allowable discharge current, a maximum allowable output power, and/or a maximum operating temperature of the battery type. The data may comprise identification data of the battery type. The identification data may include a transcription of a barcode or a QR-code placed on batteries of the respective battery type. The identification data may include a transcription of textual information placed on batteries of the respective battery type. The identification data may include geometrical data of batteries of the respective battery type. The battery identification data may be identical to the unique battery type identifier, or may be different from the unique battery type identifier.

### Discharging process

A flowchart of a discharging process according to one possible embodiment of the invention is shown in Fig. 4. The process starts with providing a battery 101 to be discharged in step 301. The step 301 of providing the battery 101 may either be automatically controlled, or may be executed manually, or may be a combination of both. In step 302, an initial discharge current is applied to the battery 101.

The initial discharge current may be determined automatically by the control unit 140. Therefore, the control unit 140 may use battery identification means to acquire identification data from the battery, and may then access the database 150 for locating a record of a battery type with corresponding identification data. The control unit may then read a maximum allowable discharge current from the database 150, and may use this maximum allowable discharge current as initial discharge current.

In step 303, a status of the battery 101 is assessed. For assessment of the battery status, the control unit 140 acquires readings from the sensors 141, 142. In step 304, it is determined whether the battery status is OK, i.e. the battery 101 is in a non-critical state. Therefore, the control unit 140 compares the sensor readings with data read from the database 150 to determine if the battery 101 is in a non-critical state, a critical state, or in transition from a non-critical state towards a critical state.

The status of the battery 101 may be determined based on a battery temperature reading. The database 150 may contain data indicating a maximum temperature at which the battery 101 may be operated. The battery status may be considered OK if the battery temperature is below the maximum operating temperature, or below a predetermined safety margin under the maximum operating temperature. If e.g. the maximum operating temperature of the battery 101 is 60°C, the status of the battery 101 may be considered OK if the temperature is below a 5°C margin under the maximum temperature, i.e. below 55°C.

The status of the battery 101 may be determined based on a temperature change rate. An upper limit of an allowable temperature change rate may again be contained in the database 150. If a maximum allowable temperature change rate is e. g. 0.5°C per minute, the battery status may be considered OK if the battery temperature changes by 0.4°C per minute, but not OK if the temperature changes by 0.5°C per minute.

Absolute battery temperature and temperature change rate may be considered in combination for assessing the battery status. The battery status may be considered OK if the battery temperature is close to the maximum allowable temperature, but is constant. In contrast, the battery may be considered to be in a transitional state if the battery temperature is below the maximum allowable temperature but increases with a high temperature change rate. Assessment of the battery status may involve estimating a time by when the battery temperature will reach the maximum allowable battery temperature, given the momentary battery temperature and battery temperature change rate. The battery status may be considered OK if the estimated battery temperature will not reach the maximum allowable temperature within the next e. g. 10 minutes.

The battery temperature used for the above assessments may be a surface temperature of the battery 101, as measured by a contacting or non-contacting temperature sensor. The battery temperature may also be a core temperature of the battery 101. A core temperature of the battery 101 may be measured by an internal temperature sensor 6 included in the battery 101. It must be considered though, that an internal temperature sensor 6 of the battery may be unreliable due to an unknown maintenance status of the battery 101. Another way to determine a core temperature of the battery 101 may include estimating the core temperature based on surface temperature, surface temperature change rate, battery thermal mass, battery heat dissipation characteristics, and electric parameters like battery output voltage and discharge current.

The status of the battery 101 may be determined based on an output voltage of the battery 101. The nominal output voltage of each battery is determined by the electrochemical design of the individual battery cells, and the combination of cells in the battery. Common Lithium-based batteries have nominal cell voltages around 3.5V. By serial connection of many cells, battery modules may provide output voltages of several 100V, e. g. 400V.

Under load, the output voltage of a battery drops below the nominal voltage. The main reason for this voltage drop is an internal electric resistance of the cells, which increases while the battery is discharged. For a given discharge current, the voltage drop over the internal resistance increases with the increase of the internal resistance, so the output voltage of the battery decreases. The internal voltage drop causes Joule heating of the battery, which increases with decreasing battery output voltage.

As a consequence, it may be OK to apply a certain discharge current to battery 101 while the battery output voltage is about 90% of the nominal battery output voltage. When the battery output voltage has dropped to 80% of the nominal battery output voltage, the internal voltage drop, and the corresponding heat production, in the battery 101 have doubled, so applying the same discharge current to battery 101 may cause rapid heating of the battery 101, bringing it into a transitional or even critical state.

Therefore, for each value of the discharge current applied to battery 101, a threshold of battery output voltage may be provided, and the battery status may be considered non-critical if the battery output voltage is above the threshold voltage, while the battery status may be considered transitional if the battery output voltage is below the threshold voltage.

Assessment of the battery status may include application of a multi-dimensional set of characteristic curves. A characteristic curve may include a curve of allowable discharge current over battery output voltage. A characteristic set of curves may include curves of allowable discharge currents over battery output voltage at different battery temperatures. A further set of characteristic curves may include curves of allowable discharge currents over battery output voltage at different battery temperature change rates. Yet another set of characteristic curves may include curves of allowable discharge currents over battery output voltage at different battery temperatures and battery temperature change rates. In a specific case, the output voltage of the battery 101 may drop to 0V. While a battery output voltage of 0V does not necessarily indicate the battery 101 being in a transitional or critical state, this case still may need special attention. Therefore, in case of a battery output voltage of 0V, the status determination will be "not OK, so that this case can be handled appropriately.

A battery output voltage of 0V may indicate that the voltage drop over the internal resistance of the battery 101 equals the nominal voltage of the battery 101. In this case, discharge current should be reduced so that a non-zero battery output voltage is obtained and can be used for further monitoring of battery status.

On the other hand, a battery output voltage of 0V may also indicate that the battery 101 is completely discharged, so that further application of a discharge current should be avoided.

Assessment of the battery status may involve determining shape characteristics and/or emission characteristics of the battery 101. Changes in battery shape may be determined through a vision system sensor. Emissions from battery 101 may also be determined by a vision system sensor, if the emissions involve fumes, smoke, sparks, or flames. Acoustical emissions from battery 101 may be detected by a microphone sensor.

Shape changes or emissions from battery 101 will usually be an indicator for a critical battery state, which may require specific countermeasures, which will be described further below.

If the battery status is OK, the process continues with step 303, where the status of the battery is assessed again. In an optional variation of the shown process, an additional step 308 may be executed if the battery status is OK, which is explained further below. As step 308 is optional, it is shown in broken lines. If the status of the battery 101 is not OK, the process continues with step 305. In step 305, it is determined whether the battery 101 has been discharged completely.

If the battery 101 has been discharged completely, the process is terminated in step 306. Step 306 may include equipping the battery 101 with short circuit connectors, like a short circuit bracket, to avoid a rebound of battery voltage from causing problems during further processing. The battery 101 may then be subjected to an automated recycling process, which is not subject of this disclosure.

If the battery 101 has not been discharged completely, process is continued with step 307, where the discharge current is modified in a way to maintain the battery 101 in a non-critical state. Modification of the discharge current may be a reduction of the discharge current. The process is then continued with step 303, in which the status of the battery 101 is assessed again. After modification of the discharge current in step 307, a predetermined time may be allowed for settling of the battery 101 with the new discharge current. This may avoid erroneous status determinations caused by transient or time-lag behavior of battery output voltage, battery temperature, or sensor readings. The predetermined time may be in the range of seconds, e. g. 1 second, 2 seconds, 5 seconds, or 10 seconds, or in the range of minutes, e. g. 1 minute, 2 minutes, or 5 minutes.

In the optional step 308, the control unit 140 checks if the discharge current is to be modified according to a predetermined schedule, irrespective of the battery status. If this is the case, process continues with step 307 as explained above. If no modification is scheduled, the process continues with step 303.

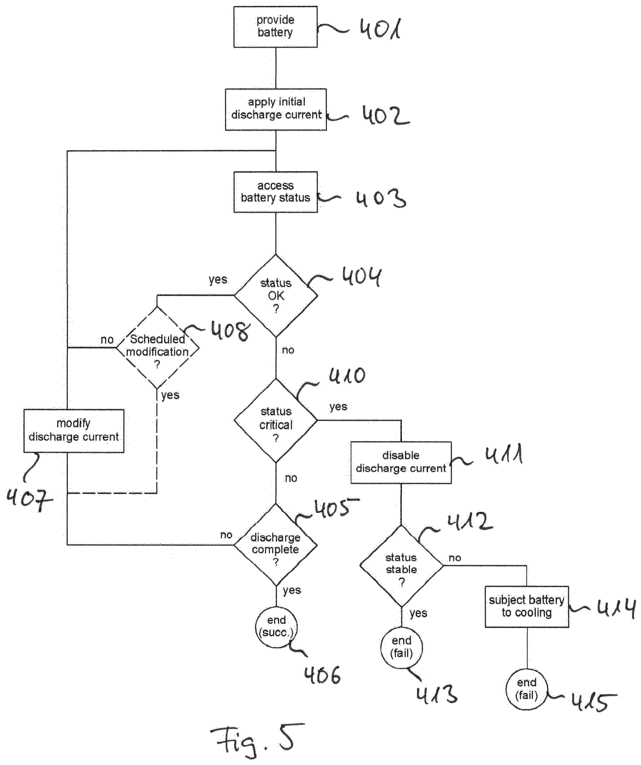

Another possible process for discharging a battery 101 is shown in Fig. 5. Again, a battery 101 is provided in a step 401, an initial discharge current is applied to battery 101 in a step 402, the battery status is assessed in step 403, and the battery status is evaluated in step 404. The details of steps 401 to 404 may be the same as described above in relation to steps 301 to 304. If the battery status is found to be OK in step 404, the process is again continued with step 403, or optionally with step 408.

If the evaluation in step 404 shows that the battery status is not OK, a further evaluation is done in step 410. In this step 410, the status of the battery 101 is checked for parameters indicating a critical state of the battery 101. Such parameters may include, but are not limited to, maximum allowable battery temperature (without safety margin), maximum allowable battery temperature change rate, battery voltage change rate, and/or abnormal emission behavior of the battery, like acoustic emissions and/or emission of fumes, smoke, sparks, or flames.

If a critical battery status is found in step 410, discharge current is disabled in step 411. By disabling the discharge current, further deterioration of the battery status may be avoided.

After disabling the discharge current in step 411, it is checked in step 412 if the battery status is stable. A stable status may include a temperature or a temperature change rate of the battery 101 returning to an allowable range after disabling the discharge current.

Step 412 may include a waiting step, in which the battery status is allowed to settle. The waiting step may include waiting, after disabling the discharge current, for 1 minute, 2 minutes, 5 minutes or more, before the status of the battery is determined.

Step 412 may include repeatedly monitoring the status of the battery for a predetermined time, to make sure if the battery status has reliably settled. The predetermined time may be 30 minutes, 1 hour, 2 hours, or 5 hours. If, at the end of the predetermined time, the battery status has reliably settled, the battery 101 can be removed from the system and can be subjected to further processing steps, which are not subject of this disclosure. The process is then terminated as failed in step 413.

If the battery status is found not to have settled in step 412, e. g. a battery temperature or a battery temperature change rate remain above the respective allowable limit values, the battery 101 is subjected to battery cooling in step 414, e. g. by moving battery 101 into the cooling unit 160. In the cooling unit 160, exothermic reactions in the battery 101 can be slowed down or brought to halt, so that fire hazard from the damaged battery 101 can be mitigated. The battery 101 may be kept in the cooling unit 160 for an appropriate time, like 24 hours, and may then be subjected to further processing steps, which again are not subject of this disclosure. The process is then terminated as failed in step 415.

In case of certain critical states of battery 101, step 412 may be omitted, and the battery 101 may be directly subjected to battery cooling. This may include cases where the battery shape has changed due swelling by internal pressure buildup, or where emissions like sounds, fumes, smoke, sparks, or flames have been detected. In such cases, it may be self-evident that the battery status will not settle by itself, so that further countermeasures are unavoidable.

If the battery status is found not to be critical in step 410, the process may continue with step 405, where complete discharge of the battery 101 is checked. If the battery 101 is discharged completely, the process is ended in step 406. Again, a short-circuit connector may be applied to the battery 101, before it is forwarded to further processing.

If the battery 101 is not completely discharged, the discharge current is modified in step 407, and the process is continued with step 403.

Similar to the process explained in relation to Fig. 4, the control unit 140 may check for a scheduled modification of the discharge current in step 408. The process may then continue either with step 407, if a modification is scheduled, or with step 403, if no modification is scheduled.

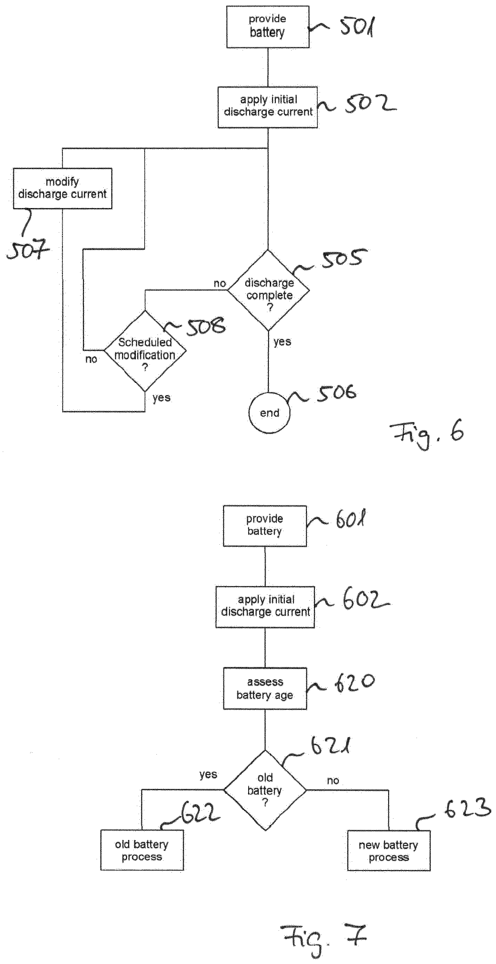

A further possible process for the discharging a battery 101 is shown in Fig. 6. Again, a battery 101 is provided in step 501, and an initial discharge current is applied to battery 101 in step 502. Details of steps 501 and 502 may be similar to steps 301, 401, 302, 402 described above, and are therefore not described again.

Other than in the processes described in relation to Figures 4 and 5, the process of Fig. 6 does not include assessment of the battery status, but only checks if the battery 101 is fully discharged in step 505. If the battery 101 is fully discharged, the process is terminated in step 506. As described above, a short-circuit connector may again be applied to battery 101.

If the battery 101 is not fully discharged, the process continues with step 508, where the control unit 140 checks for a scheduled modification of the discharge current. If a modification is scheduled, the process continues with step 507, otherwise it continues with step 503.

The process shown in Fig. 6 is kept very simple and requires less equipment compared to the processes shown in Figs. 4 and 5. Still, this process provides for fast, efficient, and secure discharging of batteries.

Yet another possible process for discharging batteries is shown in Fig. 7. Again, a battery is provided in step 601, and an initial discharge current is applied in step 602.

In a next step 620, an age of the battery 101 is determined. Battery age may be determined based on historic data stored in a control circuitry 5 of the battery 101. However, battery age data may not always be available in a control circuitry 5, or the control circuitry may be inaccessible or damaged. In order to obtain a reliable estimate of the age of battery 101, initial response of the battery 101 to the discharge current may be evaluated. Due to decreasing battery capacity with increasing battery age, an old battery may have significantly less capacity than a new one.

In step 621, the battery is determined to be either "old" or "new". In the context of this disclosure, a battery may be considered "old" if it has achieved above 60%, above 70%, above 80% or above 90% of its intended service time. Otherwise, the battery is considered "new". In the context of this disclosure, a "service time" of a battery may be a physical time since production of the battery, but may also include a number of recharging cycles the battery has been subjected to.

If the battery 101 is determined to be "old", the battery 101 may further be subjected to a discharge process optimized for old batteries. This is shown as process step 622. If the battery is determined to be "new", it is further subjected to a discharge process optimized for new batteries in process step 623.

The process steps 622, 623 are here used as placeholders for complete discharge processes as shown in Figures 4, 5 or 6. The main distinction for between discharge processes for "old" and "new" batteries may be in step sizes of discharge currents, applied battery output voltage thresholds, waiting times, and the like.

In possible modifications of the shown process, batteries may be categorized in more than two age categories "old" and "new". As an example, three, four or five age categories may be applied instead.

### Software

The steps of the processes shown in Figures 4 to 7 may be controlled by software instructions running on the processing circuitry 200 of the control unit 140. The software instructions may be stored in the memory device 202, and may be read by the processing circuitry 200 for execution. The software instructions may be stored in the form of machine code, which can directly be executed by the processing circuitry 200. The software instructions may be stored in the form of a higher-level programming language, and may be translated into machine code in real time by an interpreter program executing on the processing circuitry 200.

The software instructions may be provided separately from the control unit 140. The software instructions may be provided as a computer program product, distributed or offered for sale or licensing on a physical data-carrying element, like a Floppy Disk, a CD, a DVD, or a USB stick. The computer program product may be distributed or offered for sale or licensing through a network service. The computer program product may be offered for download from a web server, a cloud server, or the like.

Further modifications of the shown systems and processes are possible. Some exemplary embodiments are disclosed in the following paragraphs:
Example 1: A method of discharging a battery, comprising the steps:
   - applying an initial discharge current to the battery, and
   - repeatedly modifying the discharge current according to a predetermined schedule, so that the battery is maintained in a safe operating condition while being discharged.
Example 2: The method of example 1, further comprising the steps of identifying the type of battery, and determining the initial discharge current and/or the predetermined schedule based on the identified type of the battery.
Example 3: The method of example 1 or 2, further comprising the steps of repeatedly monitoring a status of the battery through one or more sensors, and modifying the discharge current in response to the status of the battery.
Example 4: The method of example 3, wherein monitoring the status of the battery includes determining at least one of output voltage, output voltage change rate, temperature, temperature change rate, shape of the battery, and/or emission behaviour of the battery.
Example 5: The method of example 4, wherein monitoring the status of the battery includes determining an age and/or charge level of the battery from the output voltage, output voltage change rate, temperature, and/or temperature change rate of the battery.
Example 6: The method of example 3 or 4, wherein the temperature of the battery is a surface temperature of the battery.
Example 7: The method of example 3 or 4, wherein the temperature of the battery is a core temperature of the battery.
Example 8: The method of any of any of examples 1 to 7, wherein the discharge current is modified in discrete steps.
Example 9: The method of examples 3 to 8, wherein the discharge current is reduced when the output voltage drops below a threshold value.
Example 10: The method of any of examples 3 to 9, wherein the discharge current is reduced if the temperature of the battery rises above a threshold value.
Example 11: The method of example 9 or 10, wherein threshold values of the temperature and/or output voltage are determined based on the type, and optionally the age and/or the charge level, of the battery.
Example 12: The method of any of examples 8 to 11, wherein, after modifying the discharge current, the discharge current is maintained constant for a predetermined time, to allow the status of the battery to settle.
Example 13: The method of any of examples 3 to 11, wherein the discharge process is terminated if the temperature change rate rises above a threshold level.
Example 14: The method of example 13, further comprising subjecting the battery to external cooling if the temperature of the battery does not settle in a predetermined time after termination of the discharge process.
Example 15: The method of any of examples 3 to 14, further comprising terminating the discharge process and subjecting the battery to external cooling if abnormal emission behaviour of the battery is detected.
Example 16: A system for discharging a battery, comprising battery discharging means and a control unit, wherein the control unit is configured to control the battery discharging means to execute a method according to any of examples 1 to 15 with a battery provided to the system.
Example 17: The system of example 16, further comprising one or more sensors for monitoring a status of the battery.
Example 18: The system of example 16 or 17, wherein the control unit comprises processing circuitry and a memory device connected to the processing circuitry.
Example 19: The system of any of examples 16 to 18, further comprising battery identification means.
Example 20: The system of example 19, wherein the battery identification means comprise one or more of a barcode reader, a QR-code reader, a machine vision system, and a manual input terminal.
Example 21: The system of any of examples 17 to 20, wherein the one or more sensors comprise one or more of a temperature sensor, a voltage sensor, a current sensor, and a machine vision system.
Example 22: The system of any of examples 16 to 21, further comprising a database connected to the control unit, the database storing characterizing data of one or more battery types to be provided to the system.
Example 23: The system of any of examples 16 to 22, further comprising a battery connection unit having a plurality of different connecting elements suitable for connection with different battery types.
Example 24: The system of any of examples 16 to 23, further comprising a cooling unit.
Example 25: The system of example 24, wherein the cooling unit is a water bath.
Example 26: Computer program product, comprising a set of machine-readable instructions stored on a volatile or non-volatile medium, which, when read and subsequently executed by a processing circuitry of a system according to any of examples 18 to 25, cause the system to execute a method according to any of examples 1 to 15.

## Claims

1. A method of discharging a battery, comprising the steps:
- applying an initial discharge current to the battery, and
repeatedly modifying the discharge current according to a predetermined schedule,
so that the battery is maintained in a safe operating condition while being discharged.

2. The method of claim 1, further comprising the steps of identifying the type of battery, and determining the initial discharge current and/or the predetermined schedule based on the identified type of the battery.

3. The method of claim 1 or 2, further comprising the steps of repeatedly monitoring a status of the battery through one or more sensors, and modifying the discharge current in response to the status of the battery.

4. The method of claim 3, wherein monitoring the status of the battery includes determining at least one of output voltage, output voltage change rate, temperature, temperature change rate, shape of the battery, and/or emission behaviour of the battery.

5. The method of claim 4, wherein monitoring the status of the battery includes determining an age and/or charge level of the battery from the output voltage, output voltage change rate, temperature, and/or temperature change rate of the battery.

6. The method of any of claims 1 to 5, wherein the discharge current is modified in discrete steps.

7. The method of claims 3 to 6, wherein the discharge current is reduced when the output voltage drops below a threshold value or if the temperature of the battery rises above a threshold value.

8. The method of claim 7, wherein threshold values of the temperature and/or output voltage are determined based on the type, and optionally the age and/or the charge level, of the battery.

9. The method of any of claims 6 to 8, wherein, after modifying the discharge current, the discharge current is maintained constant for a predetermined time, to allow the status of the battery to settle.

10. The method of any of claims 3 to 8, wherein the discharge process is terminated if the temperature change rate rises above a threshold level.

11. A system for discharging a battery, comprising battery discharging means and a control unit, wherein the control unit is configured to control the battery discharging means to execute a method according to any of claims 1 to 10 with a battery provided to the system.

12. The system of claim 11, further comprising one or more sensors for monitoring a status of the battery.

13. The system of claim 11 or 12, wherein the control unit comprises processing circuitry and a memory device connected to the processing circuitry.

14. The system of any of claims 11 to 13, further comprising battery identification means.

15. The system of any of claims 11 to 14, further comprising a database connected to the control unit, the database storing characterizing data of one or more battery types to be provided to the system.

16. Computer program product, comprising a set of machine-readable instructions stored on a volatile or non-volatile medium, which, when read and subsequently executed by a processing circuitry of a system according to any of claims 13 to 16, cause the system to execute a method according to any of claims 1 to 10.
